# EUROPEAN PATENT APPLICATION

(11) **EP 0 878 695 A2**
(43) Date of publication of application: **18.11.1998**
(21) Application number: 98104914.1
(22) Date of filing: 18.03.1998
(51) Int. Cl.: G01G 13/02

(54) **Apparatus for continuously measuring weight of powdery, granular or flaky material while feeding the same**

(30) Priority: 15.05.1997 JP 143277/97
(71) Applicant: Fuso Industries Co., Ltd., Ogasa-gun, Shizuoka (JP); Yugen Kaisha Kosho, Kokurakita-ku, Kitakyushu-shi, Fukuoka (JP); Noumi, Kenji, Kitakyushu-shi, Fukuoka (JP)
(72) Inventor: Noumi, Kenji, Kitakyushu-shi, Fukuoka (JP)
(74) Representative: VOSSIUS & PARTNER

(57) **Abstract**

An apparatus is used for continuously weighing and discharging dried powdery, granular or flaky material by a predetermined amount. The apparatus comprises a hopper for storing the material having a discharging section at the bottom portion, a slender feed cylinder connected obliquely and rotatably to the discharging section of the hopper, a receptacle having a closure lid at the lower portion for storing temporarily the material discharged from the feed cylinder, a weight measuring device for measuring the weight of the powdery, granular or flaky material charged into the receptacle together with the weight of receptacle, a motor mechanism for rotating the feed cylinder at a high speed or low speed, a lid opening and closing mechanism for opening and closing a closure lid of the receptacle according to the signal from a weight measuring device, and a chute for feeding downwards a specified amount of the powdery, granular or flaky material discharged from the receptacle.

## Description

The present invention relates to an apparatus for continuously measuring weight of fed powdery, granular or flaky material or mixture thereof such as dried tee leaves or dried green tee leaves by a predetermined amount.

Dried tee leaves or green tee leaves are sold in a condition where they are stored in a permeable and strong package, and it is necessary to pack a predetermined amount of dried tee leaves or dried green tee leaves in the package.

As a conventional apparatus for packing such powdery, granular or flaky material, there have been an apparatus comprising a small-sized bucket conveyor and plurality of feeders which are disposed above the bucket conveyor, and the respective feeders are provided with a vibrator or a feeding screw. In the operation of these packing apparatus, the material is discharged continuously from the feeder while being given a vibration by the vibrator and is charged continuously into the buckets of the bucket conveyor disposed below the feeder. The buckets each of which is charged with the material are turned in sequence at a predetermined charging position, and the material is fed to a packing mechanism through a chute and packed into a package which is set there preliminarily.

However, in the case of conventional packing devices equipped with a feeder type having a vibrator, because the amount of material charged in the package is determined by the operation time of the feeder, there has been a problem that the discharging speed of feeder varies due to a voltage fluctuation, or the amount of discharged material varies due to the amount of stocked material.

There has been another problem that such a device requires an operator to adjust the amount of discharging the material at all times so as to prevent the occurrence of defective products with less content in the package, which increases the production cost due to the personnel expenditure. Further, in actual operation, to prevent the occurrence of defective products, the material of 5 to 10 % more than the predetermined amount is always charged to the package and thus, because of increased material cost, the packaged products become expensive.

Furthermore, in the conventional packing devices using a vibrator, vibrations of the vibrator are transmitted to a weight measuring device, which makes it difficult to measure accurately a small weight of material, that is, several grams per package.

With respect to conventional packing devices equipped with a screw type feeder, though it is possible to measure the weight of powdery material, in the case of granular or flaky material, there has been a problem that the discharging amount of material varies because the feeder discharges the material by pushing it and it is difficult to measure accurately the amount of the granular or flaky material.

The present invention has been made to solve the above-mentioned problems and, accordingly, it is an object of this invention to provide an apparatus for continuously measuring weight of powdery, granular or flaky material while feeding the same, wherein the apparatus can accurately feed and charge the material into a package so that an excessive or insufficient packing of the material can be obviated.

To achieve the above-mentioned object, according to the aspect of the present invention, there is provided an apparatus for continuously measuring weight of powdery, granular or flaky material while feeding the same which stores dried powdery, granular or flaky material, feeds it gradually, measures its weight, and discharges it by a specified amount continuously, comprising a hopper for storing the powdery, granular or flaky material having a downward-narrowing body and a discharging section at the bottom portion of the side face thereof, a slender feed cylinder connected obliquely via a bearing to the discharging section of the hopper for moving downwards gradually the powdery, granular or flaky material discharged from the hopper, a receptacle having a closure lid at the diagonally lower portion for storing temporarily the powdery, granular or flaky material discharged from the feed cylinder, a weight measuring device for measuring the weight of the powdery, granular or flaky material charged into the receptacle together with the weight of receptacle, a motor mechanism for rotating the feed cylinder at a high speed or low speed according to the signal from the weight measuring device, a lid opening and closing mechanism for opening and closing the closure lid of the receptacle according to the signal from the weight measuring device, and a chute for feeding downwards a specified amount of the powdery, granular or flaky material discharged from the receptacle.

Here, in the apparatus for continuously measuring weight of powdery, granular or flaky material while feeding the same, it is preferable that the inclining angle of the feed cylinder is in a range between 3 and 12 degrees and the total length of the feed cylinder is four times or more of the inner diameter. In such a construction, a predetermined amount of powdery, granular or flaky material is discharged gradually and evenly according to the rotation of the feed cylinder.

Further, in the apparatus for continuously measuring weight of powdery, granular or flaky material while feeding the same, an auxiliary straight hopper having a rectangular cross section can be connected to the top of the hopper for increasing the total capacity of the hopper.

Moreover, in the apparatus for continuously measuring weight of powdery, granular or flaky material while feeding the same, a bottom lid can be provided to the bottom of the hopper to discharge easily the material remaining in the hopper from the bottom.

Furthermore, in the apparatus for continuously measuring weight of powdery, granular or flaky material while feeding the same, a replaceable material guide cylinder having vanes can be attached at the inlet side of the feed cylinder for discharging the material smoothly from the hopper.

Still further, in the apparatus for continuously measuring weight of powdery, granular or flaky material while feeding the same, a plurality of the feed cylinders can be installed at the bottom of the hopper, and each of the feed cylinders is provided with the motor mechanism, the receptacle, the weight measuring device, and the lid opening and closing mechanism. In this manner, multiple measuring of a small amount of material can be carried out in a short time.

Referring to the attached drawings in which
Fig.1 is a side sectional view showing the apparatus for continuously measuring weight of powdery, granular or flaky material while feeding the material in accordance with one embodiment of the present invention,
Fig.2 is a front view of the same,
Fig.3 is a partial detailed view of the same,
Fig.4 is a partial detailed view of the same and
Fig.5(A) and Fig5(B) are partial detailed views of the same, one embodiment of present invention will be explained hereinafter for the good understanding of this invention.

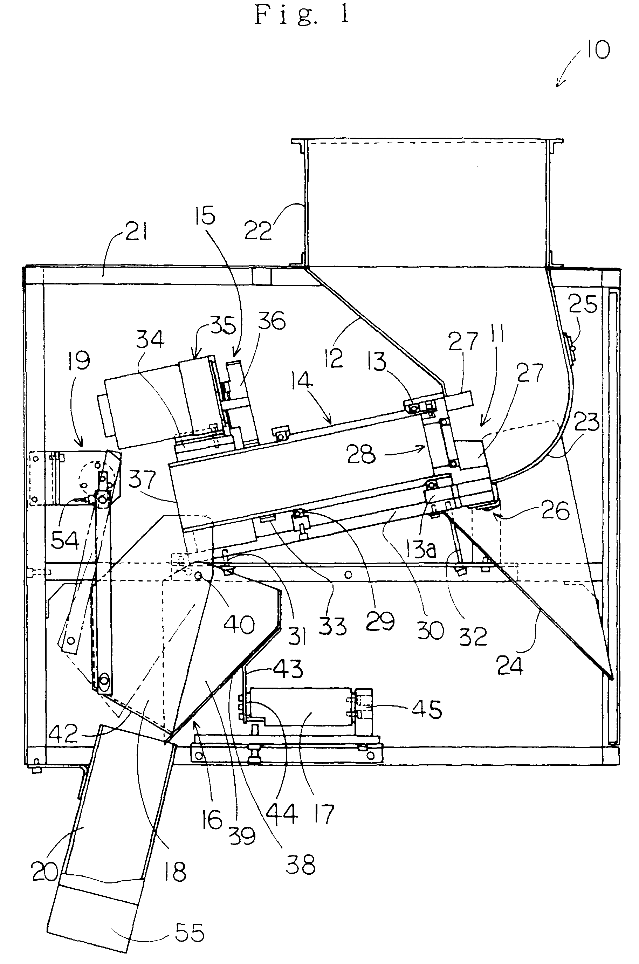

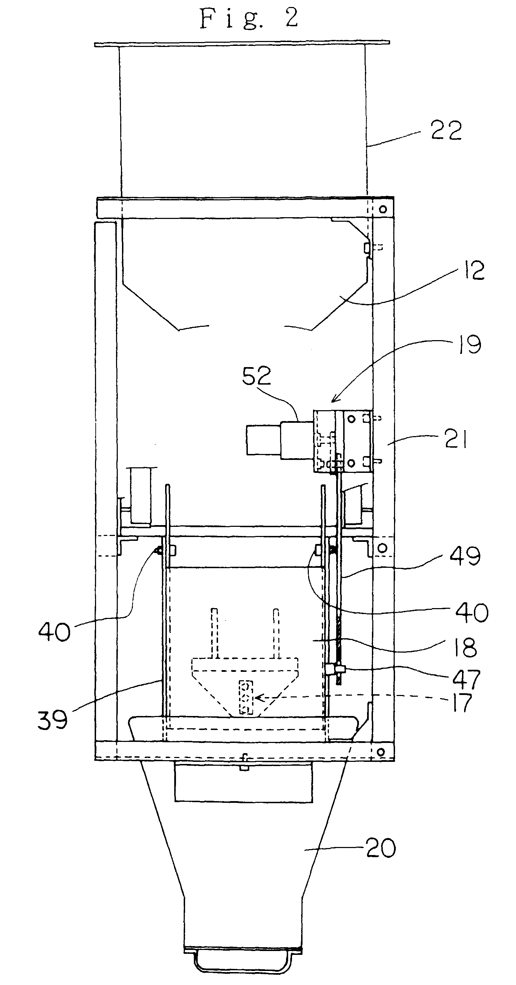

As shown in Fig.1, Fig.2 and Fig.3, the apparatus 10 for continuously measuring weight of powdery, granular or flaky material while feeding the same according to one embodiment of the present invention is totally made of a rigid material such as iron or stainless steel. Further, the apparatus 10 comprises a hopper 12 having a discharging section 11 at one side of the bottom portion thereof, a slender feed cylinder 14 connected obliquely via a bearing 13 to the discharging section 11 of the hopper 12 for moving downwards gradually the powdery, granular or flaky material discharged from the hopper 12, a motor mechanism 15 for rotating the feed cylinder 14 at a low speed, a receptacle 16 for storing temporarily the powdery, granular or flaky material discharged from the feed cylinder 14, a load cell system 17 which is one example of a weight measuring device for measuring the weight of powdery, granular or flaky material charged into the receptacle 16 together with the weight of receptacle 16, a lid opening and closing mechanism 19 to open and close a closure lid 18 of the receptacle 16 according to the signal from the load cell system 17, a chute 20 for feeding downwards a specified amount of powdery, granular or flaky material discharged from the receptacle 16, and a rigid frame 21 for supporting the components described above. The explanation of these components will be made in detail hereinbelow.

The upper portion of the hopper 12 is fixed to the rigid frame 21, and the lower portion thereof becomes gradually slender downwards and provided with the discharging section 11 at one side of the bottom portion. On the top of the hopper 12 is provided an auxiliary straight hopper 22 having a rectangular cross section, wherein a large amount of dried granular material such as tea leaves or green tea leaves can be stored. Furthermore a bottom lid 23 having a curved face is attached to the bottom of the hopper 12, by which the material remaining in the hopper 12 can be discharged outside through an auxiliary chute 24 disposed below the hopper 12. The one side of this bottom lid 23 is attached to the hopper with a hinge 25 so that the bottom lid 23 may swing freely and the other side thereof is provided with a lock mechanism 26 (a click-on lock, for example), which can be unlocked if necessary to open the bottom lid 23.

At the discharging section 11 of the hopper 12, the bearing 13 is installed for supporting the one end of the feed cylinder 14 so that the feed cylinder 14 may rotate freely. At the inlet side of the feed cylinder 14 is attached a replaceable material guide cylinder 28 provided with vanes 27, by which the material remaining near the discharging section 11 of the hopper 12 is agitated and led in the feed cylinder 14 gradually. In addition, the symbol 13a in the figure shows a bearing box.

The intermediate portion of the feed cylinder 14 is supported with another bearing 29 so that the cylinder 14 may rotate freely. Furthermore the discharging section 11 to which the bearing 13 is installed is supported by an inclined supporting plate 30, by which the feed cylinder 14 is kept at a specified downward angle in a range between 3 and 12 degrees. In addition, as shown in Fig. 1, the both ends of the inclined supporting plate 30 are fixed to the rigid frame 21 with bolts 31 and 32 at a specified angle.

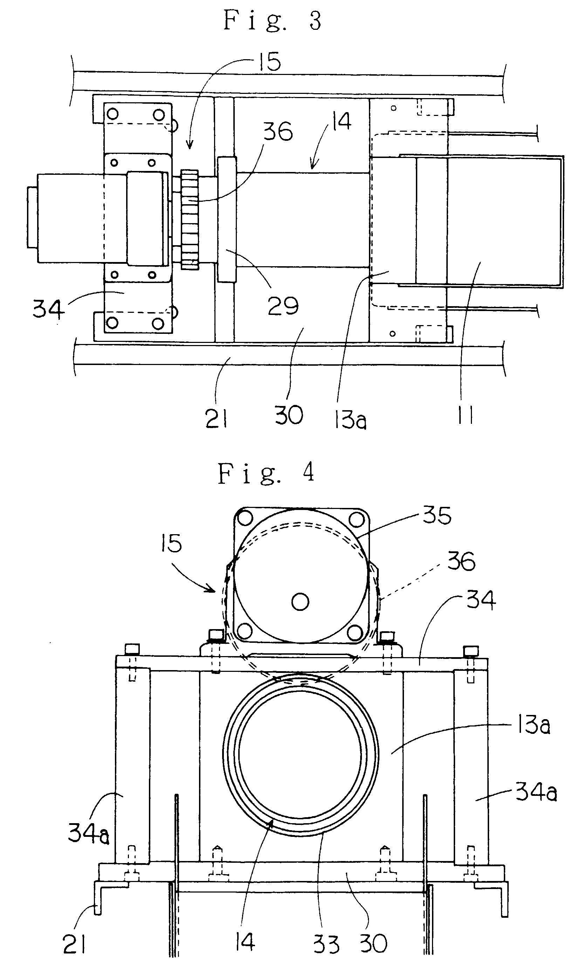

At the intermediate portion of the feed cylinder 14 there is provided a gear 33. The gear 33 engages with a gear 36 attached to the output shaft of a speed reducing motor 35 which is a constituent of the motor mechanism 15 mounted on a mounting bed 34 whose legs 34a are fixed to the both sides of the inclined supporting plate 30 as shown in Fig. 3 and Fig.4. The feed cylinder 14 can be rotated at specified speeds (for example, at 100 to 150 rpm and 10 to 15 rpm) by the motor mechanism 15.

Further, the length of the feed cylinder 14 is about four to six times of its inner diameter, so that the material charged from the inlet side can be discharged gradually and evenly from a discharging outlet 37. The material is led into the feed cylinder 14 through the material guide cylinder 28. The inner diameter of the material guide cylinder 28 is smaller than that of the feed cylinder 14. The material led in the feed cylinder 14 through the material guide cylinder 28 is moved and flows downwards gradually by the inclination and rotation of the feed cylinder 14 and is discharged from the discharging outlet 37 of the feed cylinder 14 at a specified speed.

The receptacle 16 which receives the material discharged from the discharging outlet 37 is provided with a bucket 39 whose bottom is comprised of an inclined bottom plate 38 and the closure lid 18 which is disposed inside the bucket 39 and connected to the upper portion of the bucket 39 by means of a penetrating pin 40 in the manner that the closure lid 18 may swing freely. Since there are narrow gaps between the both side plates of bucket 39 and the closure lid 18 are very narrow, the top end portion of the bottom plate 42 of the closure lid 18 contacts by its own weight directly with the inclined bottom plate 38 of the bucket 39.

To the bottom of the bucket 39 of this receptacle 16, a weight detecting section 44 of the load cell system 17 is connected via a supporting member 43. The load cell system 17 is of a cantilever type, one side of which is attached to the rigid frame 21 via an attaching member 45. By this load cell system 17, the weight of the receptacle 16 and the charged material stored therein are measured and the measured weight is outputted as an electrical signal. The signal of measurement from the load cell system 17 is inputted to a controller which is not shown and, when a predetermined weight is detected, a signal is transmitted from the controller to the lid opening and closing mechanism 19 to be explained in detail below.

As shown in Fig.1, the receptacle 16 is provided with the lid opening and closing mechanism 19 which actuates the closure lid 18 so that a predetermined amount of material held in the receptacle 16 may be discharged downwards according to a specified signal from the load cell system 17.

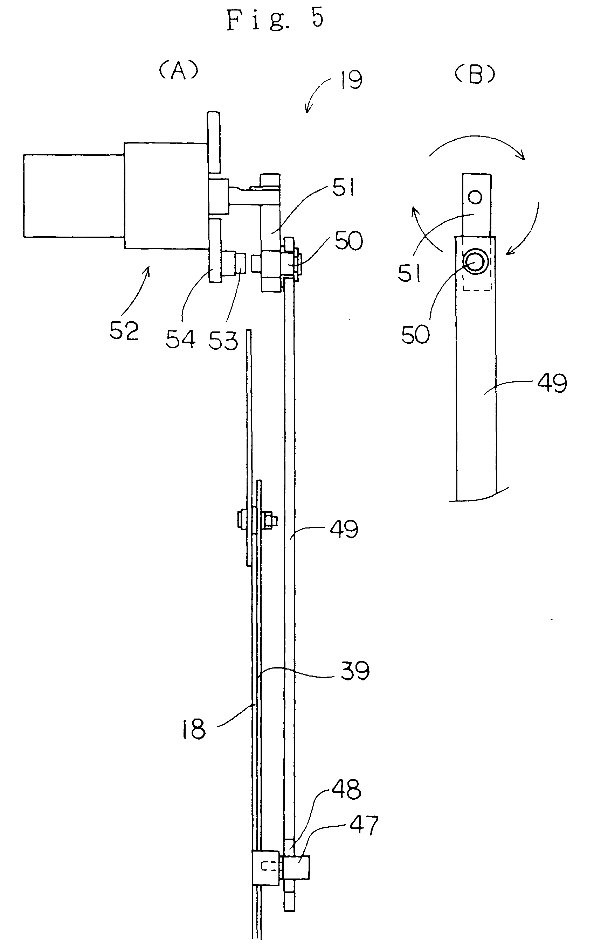

As shown in Fig.5 (A), the lid opening and closing mechanism 19 comprises a pin 47 which is disposed on the side plate of the closure lid 18, an actuating arm 49 having a hole 48 at the bottom end whose diameter is enough larger than the diameter of the pin 47, a rotary arm 51 which is rotatably connected to the upper portion of the actuating arm 49 via a pin 50, a motor 52 which rotates the rotary arm 51 by 360 degrees, a proximity sensor 53 which detects the zero point which is the vertical position of the rotary arm 51, and a supporting member 54 which supports the motor 52.

In this lid opening and closing mechanism 19, the rotary arm 51 is at the vertical position in normal state. Therefore, the actuating arm 49 is hung vertically down from the pin 50, and the pin 47 attached to the closure lid 18 is not contacting with the actuating arm 49. By this mechanism, it is possible to measure accurately the weight of receptacle 16 and the material charged in the receptacle 16.

When a specified signal is transmitted from the load cell system 17, the motor 52 rotates the rotary arm 51 in the direction shown by the arrow in Fig.5 (B), by which the actuating arm 49 is raised and, as a result, the closure lid 18 is opened. By these actions, the material held in the receptacle 16 is discharged to the chute 20 below and, by one rotation of the rotary arm 51, the actuating arm 49 returns to the initial position, and the closure lid 18 is closed.

To actuate the rotary arm 51 accurately, the proximity sensor 53 is provided which detects that the rotary arm 51 has rotated by 360 degrees and is at the vertical position again.

The chute 20 has a rectangular cross section and becomes narrower downwards so that the material stored in the receptacle 16 may securely be discharged from an outlet 55 disposed at the lower portion of the chute 20 to a specified position.

Because of the structure disclosed above, the material such as dried tea leaves discharged from the bottom section of the hopper 12 is stirred by the vanes 27 of the material guide cylinder 28 and flows into the feed cylinder 14. The feed cylinder 14 rotates at a high speed of 100 to 150 rpm until a measurement signal from the load cell system 17 reaches 90% of the predetermined target value and, when the measurement signal has reached 90% of the target value, the rotation speed of the feeding cylinder 14 changes to a lower speed of 10 to 15 rpm, and afterthere the material is discharged gradually to the receptacle 16, so that an accurate measurement of material of weight is carried out.

Since the length of the feed cylinder 14 which is inclining downwards is relatively large comparing with its inner diameter, the material is mixed evenly on the way of flowing down to the receptacle 16. The weight of receptacle 16 and the material stored therein are measured by the load cell system 17. When the measurement of the weight has reached a specified value after the rotation of the feed cylinder 14 changed into low speed, the rotation of the feed cylinder 14 is halted so as to stop the discharge of material from the feed cylinder 14 and, at the same time, the motor 52 begins to turn by the output from the control device so as to rotate the arm 52 by 360 degrees. By this motion, the closure lid 18 is opened and a specified amount of the material is discharged downwards through the chute 20. When the proximity sensor 53 detects that the closure lid 18 has been closed, the feed cylinder 14 begins to rotate at a high speed so that next material may be charged to the receptacle 16 again.

Here, if the feed cylinder 14 is kept rotating at a relatively low speed, the material would flow down gradually from the feed cylinder 14. Accordingly, the weight of discharged material after measurement would have an extremely small deviation because the opening and closing time of the closure lid 18 is short and the amount of material flowing down from the feed cylinder 14 is small and constant.

In the embodiment of the invention disclosed above, though the material is discharged by one feed cylinder 14 and discharged from the chute 20 disposed at the lower portion thereof, it is possible to execute a parallel measurement of the material weight by widening the hopper 12 and attaching thereto a plurality of feed cylinders in a row each of which provides a motor mechanism for rotating the feed cylinder, a weight measuring device, a receptacle having a closure lid and an opening and closing mechanism for the closure lid.

Further, in the embodiment of the invention, though the material used therein is dried tea leaves or green tea leaves, other granular materials or powdery material such as dried coffee powder can be applied as the material.

Furthermore, in the embodiment of the invention, though the electric motor is used in the opening and closing mechanism for the closure lid , an electromagnet can be employed as a driving means in the opening and closing mechanism for the closure lid.

The apparatus for continuously measuring weight of powdery, granular or flaky material while feeding the same in accordance with the present invention is capable of keeping the material flow constant without dispersion because the material flowing out of a hopper is discharged gradually through a feed cylinder which is disposed obliquely.

Further, it is possible to measure accurately the weight of material because the weight of material is measured by a load cell system after the material discharged from the feed cylinder and stored in the receptacle.

Especially, in the case of packing a small amount of powdery, granular or flaky material such as dried green tea leaves, dried tea leaves and dried coffee powder, this apparatus shows an excellent effect.

Furthermore, in the apparatus for continuously measuring weight of powdery, granular or flaky material while feeding the same, since the feeding cylinder is rotated at a high speed at first so as to discharge a large amount of material and, when the measured weight reaches near the target value, the feed cylinder is rotated at a low speed so as to discharge a small amount of material, it is possible to measure accurately the weight of the material in a short time.

In the apparatus for continuously measuring weight of powdery, granular or flaky material while feeding the same, a graduate flow and an accurate measurement of the material weight can be obtained by installing the feed cylinder with 3 to 12 degrees of inclination and providing the total length over four times of its inner diameter.

Still further, in the apparatus for continuously measuring weight of powdery, granular or flaky material while feeding the same, when an auxiliary straight hopper having a rectangular cross section is installed on the top of the hopper, it can be possible to store a large amount of material and make a continuous measurement of the material weight for increasing the efficiency by a large extent.

And, in the apparatus for continuously measuring weight of powdery, granular or flaky material while feeding the same, when a bottom lid is provided at the bottom of the hopper, it can be possible to discharge easily the material remaining in the hopper from the bottom in case the material to be measured is remaining in the hopper or in case of changing the kind of material to be measured.

Furthermore, in the apparatus for continuously measuring weight of powdery, granular or flaky material while feeding the same, when a replaceable material guide cylinder provided with vanes is disposed at the inlet side of the feed cylinder, it is possible to break a bridge of material formed in the hopper and keep a smooth material flow in the feed cylinder.

Still further, in the apparatus for continuously measuring weight of powdery, granular or flaky material while feeding the same, when a plurality of feed cylinders are installed on the bottom of the hopper and each of them is provided with a motor mechanism, a receptacle, a weight measuring device, and a lid opening and closing mechanism, it becomes possible to make multiple measurement of a small amount of material in a short time.

## Claims

1. An apparatus for continuously measuring weight of powdery, granular or flaky material while feeding the same, comprising:
a hopper for storing the powdery, granular or flaky material having a downward-narrowing body and a discharging section at the side of bottom portion thereof,
a slender feed cylinder connected obliquely via a bearing to the discharging section of the hopper for moving downwards gradually the powdery, granular or flaky material discharged from the hopper,
a receptacle having a closure lid at the diagonally lower portion for storing temporarily the powdery, granular or flaky material discharged from the feed cylinder,
a weight measuring device for measuring the weight of the powdery, granular or flaky material charged into the receptacle together with the weight of receptacle,
a motor mechanism for rotating the feed cylinder at a high speed or low speed according to the signal from the weight measuring device,
a lid opening and closing mechanism for opening and closing the closure lid of the receptacle according to the signal from the weight measuring device, and
a chute for feeding downwards a specified amount of the powdery, granular or flaky material discharged from the receptacle.

2. An apparatus for continuously measuring weight of powdery, granular or flaky material while feeding the same according to claim 1, wherein the inclining angle of the feed cylinder is in a range between 3 and 12 degrees and furthermore the total length of the feed cylinder is four times or more of its inner diameter.

3. An apparatus for continuously measuring weight of powdery, granular or flaky material while feeding the same according to claim 1 or 2, wherein an auxiliary straight hopper having a rectangular cross section is connected to the top of the hopper.

4. An apparatus for continuously measuring weight of powdery, granular or flaky material while feeding the same according to either one of claims 1, 2 and 3, wherein a bottom lid is provided to the bottom of the hopper.

5. An apparatus for continuously measuring weight of powdery, granular or flaky material while feeding the same according to either one of claims 1, 2, 3 and 4, wherein a replaceable material guide cylinder having vanes is attached at the inlet side of the feed cylinder.

6. An apparatus for continuously measuring weight of powdery, granular or flaky material while feeding the same according to either one of claims 1, 2, 3, 4 and 5, wherein a plurality of the feed cylinders are installed at the bottom of the hopper, and each of the feed cylinders is provided with the motor mechanism, the receptacle, the weight measuring device, and the lid opening and closing mechanism.
